# FASCICULE DE BREVET EUROPEEN

(11) **EP 4 496 682 B1**
(45) Date de publication et mention de la délivrance du brevet: **01.04.2026**
(21) Numéro de dépôt: 23704072.0
(22) Date de dépôt: 02.02.2023
(51) Int. Cl.: B25J 9/08, B22F 10/00, B22F 10/322, B25J 9/02

(54) **DISPOSITIF DE FABRICATION ADDITIVE COMPRENANT UN ROBOT DE CARACTÉRISATION DES ÉCOULEMENTS GAZEUX DE PROTECTION**
ADDITIVE FERTIGUNGSVORRICHTUNG MIT EINEM ROBOTER ZUR CHARAKTERISIERUNG VON SCHUTZGASSTRÖMEN
ADDITIVE MANUFACTURING DEVICE COMPRISING A ROBOT FOR CHARACTERISING PROTECTIVE GAS FLOWS

(30) Priorité: 22.03.2022 FR 2202540
(43) Date de publication de la demande: 29.01.2025
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: LEFEBVRE, Philippe, 78350 Jouy-en-Josas (FR); MANDOU, Quentin, 78350 Jouy-en-Josas (FR)
(74) Mandataire: Air Liquide
(86) Numéro de dépôt international: PCT/EP2023/052593
(87) Numéro de publication internationale: WO 2023/179948

(56) Documents cités:
- WO-A1-2019/197701
- US-A1- 2017 144 223
- US-A1- 2018 252 568
- US-A1- 2019 176 233
- US-B2- 6 899 511

## Description

La présente invention concerne un dispositif de fabrication additive comprenant un robot dédié au contrôle des écoulements gazeux de protection générés dans une enceinte de fabrication dudit dispositif de fabrication.

En particulier, l'invention trouve application dans un dispositif de fabrication additive destiné à la mise en œuvre d'un procédé de fabrication additive par fusion laser sur lit de poudre métallique.

La fabrication additive regroupe les procédés permettant de fabriquer des pièces en trois dimensions par ajout successif de couches de matière, à partir d'un modèle numérique, sans recourir à de l'outillage. Le terme « additive » est utilisé par opposition aux principes des méthodes traditionnelles, comme l'usinage, qui reposent sur un enlèvement de la matière.

Les méthodes de fabrication additive, également appelées méthodes d'impression 3D, comme en particulier la fusion laser sélective, le frittage laser sélectif, la stéréolithographie et similaires, sont comprises comme des méthodes dans lesquelles un composant tridimensionnel est produit à partir de matériaux de base au moyen de processus chimiques et/ou physiques. Le matériau de base est généralement rendu liquide ou fondu au moins par régions, afin de durcir en vue de former la pièce fabriquer.

En particulier, on connaît des procédés mettant en œuvre un faisceau laser et un matériau de base sous forme de poudre, le matériau étant fondu localement, et couche par couche, grâce à un balayage sélectif du lit de poudre par le laser, suivant un modèle numérique prédéfini. On parle aussi de fusion laser sur lit de poudre. Les procédés par fusion entraînent un échauffement du matériau de base à une température supérieure à la température de fusion. Lors de l'interaction entre le faisceau laser et le lit de poudre, il se forme dans la région fondue par le faisceau une colonne de vapeur métallique appelée capillaire, ou « keyhole » en anglais, telle qu'on la rencontre dans des procédés de soudage laser. Du fait de la détente de la vapeur métallique vers l'extérieur du capillaire, il se produit des fumées et des projections métalliques qui sont arrachées du lit de poudre et du bain de métal fondu.

Or, les projections métalliques contiennent des oxydes et la fusion d'oxydes lors de la fabrication des pièces par fabrication additive peut générer des défauts de fabrications au sein de la pièce tels que des défauts visuels, métallurgiques, de compacité et/ou de porosités.

Afin de contrôler les propriétés et la qualité des pièces fabriquées, il est connu d'opérer des procédés de fabrication additive dans des chambres de fabrication additive. Ces chambres sont des enceintes fermées dans lesquelles l'atmosphère gazeuse est contrôlée. Les chambres de fabrication sont munis d'un système d'alimentation en gaz de protection relié au volume interne de chambre de fabrication afin d'y produire un écoulement gazeux visant à protéger la région de fabrication de l'oxydation, des fumées et des retombées de projections.

L'homogénéité de l'écoulement gazeux au sein des chambres de fabrication additive permet d'assurer la qualité des pièces produites, notamment pour des alliages dégageant d'importantes fumées ou pour les productions de pièces de grande taille, nécessitant des temps de production de plusieurs heures voire plusieurs jours.

Il est toutefois connu que les écoulements gazeux générés dans les chambres de fabrication additive ne sont pas ou peu homogènes, et les informations relatives à l'inhomogénéité des écoulements gazeux de protection ne sont en général pas disponibles.

Or, le manque d'homogénéité de la nappe de gaz de protection peut provoquer une diminution d'efficacité d'évacuation des fumées et des projections au niveau de la zone d'interaction. Ces phénomènes ont été décrits dans plusieurs publications dont l'article intitule "Influence of the shielding gas flow on the removal of process by-products in the selective laser melting process", de A. Ladewig et al. (Additive Manufacturing, Vol. 10, 2016, pp. 1-9) et l'article intitulé "Gas flow effects on selective laser melting (SLM) manufacturing performance", de B. Ferrar et al. (Journal of Materials Processing Technology vol. 212, 2012, pp. 355-364).

Il existe des systèmes permettant de cartographier des écoulements gazeux produits dans des chambres de fabrication additive comme celui décrit dans la publication intitulée "A study into the effects of gas flow inlet design of the renishaw am250 laser powder bed fusion machine using computational modelling", de A.M Philo (Solid Freeform Fabrication 2017 : Proceedings of the 28th Annual International Solid Freeform Fabrication Symposium, pages 1203 à 1219). Ces systèmes sont généralement équipés d'une sonde permettant de mesurer la vitesse des écoulements. En général, ces systèmes comportent une sonde supportée par un robot apte à se déplacer au sein de l'écoulement produit au-dessus de la région de fabrication. Un autre exemple d'un tel robot est divulgué dans la US 2018/252568 A1.

Toutefois, ces robots sont construits en fonction des dimensions de la chambre et de la région de fabrication et ne sont pas modulables. Ces dimensions varient d'un fabricant de machines de fabrication additive à un autre et varient également selon les applications visées par les utilisateurs et les dimensions des pièces à produire. La caractérisation des écoulements gazeux impose ainsi de construire un robot de mesure dédié à chaque configuration de chambre existante, ce qui complexifie l'installation du système de caractérisation.

Par ailleurs, les possibilités de déplacement dans le volume de la chambre de fabrication additive peuvent se trouver limitées, entraînant une cartographie incomplète ou peu précise des écoulements gazeux.

La présente invention a pour but de remédier aux inconvénients décrits ci-dessus, en particulier de proposer un dispositif de fabrication additive muni d'un robot de caractérisation des écoulements gazeux de protection et dans lequel le robot est facilement adaptable aux dimensions de la chambre de fabrication.

Une solution selon la présente invention est alors un dispositif de fabrication additive d'au moins une pièce comprenant :
- une chambre de fabrication comprenant dans son volume interne une région de fabrication,
- un moyen d'irradiation configuré pour irradier au moins une partie de la région de fabrication correspondant à une section transversale de ladite pièce,
- un système d'alimentation en gaz relié au volume interne de chambre de fabrication et configuré pour produire un écoulement gazeux de protection de la région de fabrication lorsque la chambre de fabrication est alimentée en gaz,
- un robot modulable configuré pour caractériser au moins une portion de l'écoulement gazeux de protection, ledit robot modulable comprenant :
   ∘ un bras de mesure comprenant au moins une sonde de mesure configurée pour mesurer au moins une grandeur physique caractéristique de l'écoulement gazeux,
   ∘ un premier châssis supportant le bras de mesure,
   ∘ un premier bras de déplacement associé au premier châssis et s'étendant parallèlement à une première direction,
   ∘ des premiers moyens d'entraînement du premier châssis aptes à générer un déplacement en translation du premier châssis le long du premier bras de déplacement,
   ∘ un deuxième châssis auquel le premier bras de déplacement est rendu solidaire,
   ∘ un deuxième bras de déplacement associé au deuxième châssis et s'étendant parallèlement à une deuxième direction,
   ∘ des deuxièmes moyens d'entrainement du deuxième châssis aptes à générer un déplacement en translation du deuxième châssis et du premier bras de déplacement le long du deuxième bras de déplacement, caractérisé en ce qu'au moins l'un du premier bras de déplacement et du deuxième bras de déplacement du robot modulable comprend plusieurs modules physiquement distincts et assemblés entre eux par des moyens d'assemblage amovibles de sorte que la longueur totale du premier bras de déplacement et/ou la longueur totale du deuxième bras de déplacement est ajustable par retrait ou ajout d'un ou plusieurs modules.

Selon le cas, l'invention peut comprendre l'une ou plusieurs des caractéristiques énoncées ci-dessous.
- la première direction est orthogonale à la deuxième direction.
- le robot modulable comprend des troisièmes moyens d'entraînement du bras de mesure solidaires du premier châssis, les troisièmes moyens d'entraînement étant aptes à générer un déplacement en translation du bras de mesure parallèlement à une troisième direction orthogonale à la première direction.
- le robot modulable comprend en outre un troisième châssis et un troisième bras de déplacement associé au troisième châssis, le troisième bras de déplacement s'étendant parallèlement au deuxième bras de déplacement, le premier bras de déplacement étant solidaire du troisième châssis, le robot modulable comprenant des quatrièmes moyens d'entraînement du troisième châssis (110) aptes à générer un déplacement en translation du troisième châssis le long du troisième bras de déplacement et des moyens de synchronisation des deuxièmes et quatrièmes moyens d'entraînement configurés pour synchroniser le déplacement en translation du deuxième châssis et du troisième châssis.
- le robot modulable comprend des cinquièmes moyens d'entraînement aptes à générer un déplacement en rotation du deuxième châssis autour du deuxième bras ou à générer une rotation du deuxième bras sur lui-même.
- le robot comprend des moyens d'ajustement angulaire configurés pour ajuster le positionnement de la sonde de mesure par pivotement sur le premier bras de déplacement et/ou par rotation autour du premier bras de déplacement.
- les moyens d'assemblage amovibles d'un module à un autre comprennent au moins une pièce intermédiaire et des moyens de solidarisation de ladite pièce intermédiaire à un module d'une part et à l'autre module d'autre part.
- les moyens d'assemblage amovibles sont configurés pour l'assemblage d'un module à un autre par encastrement et/ou par liaison magnétique.
- chacun des premier, deuxième et/ou troisième bras de déplacement et/ou le bras de mesure du robot modulable comprend de 2 à 40 modules, de préférence de 2 à 10 modules.
- les modules formant les premiers, deuxième et/ou troisième bras de déplacement et/ou le bras de mesure du robot modulable présentent des longueurs comprises entre 25 et 500 mm.
- chacun des premiers, deuxièmes, troisièmes, quatrièmes et/ou cinquièmes moyens d'entraînement comprend un moteur coopérant avec un système d'entraînement à pignon et crémaillère, le ou les bras de déplacement ayant une surface dentée destinée à s'engrener avec un pignon denté, ou un système d'entraînement par friction comprenant un pignon revêtu d'un matériau déformable coopérant par friction avec le ou les bras de déplacement.
- la sonde de mesure est configurée pour mesurer une vitesse et/ou un débit volumique de l'écoulement gazeux, en particulier la sonde de mesure comprend un tube de Pitot ou un système à fil chaud.
- le bras de mesure comprend au moins une sonde de mesure additionnelle configurée pour mesurer une température et/ou une teneur en oxygène dans l'écoulement gazeux ou la sonde de mesure est configurée pour mesurer une température et/ou une teneur en oxygène dans l'écoulement gazeux.
- Le dispositif configuré pour la fabrication additive par fusion laser sur lit de poudre, le dispositif comprenant :
   ∘ un plateau de fabrication configuré pour recevoir le matériau de base sous la forme d'une couche de poudre métallique. a direction de fabrication z suivant laquelle les couches de matériau de base sont déposées et fondues successivement.
   ∘ des moyens d'étalement de ladite couche de façon à former un lit de poudre s'étendant dans un plan orthogonal à une direction de fabrication,
   ∘ au moins une source laser configurée pour irradier et opérer une fusion sélective du lit de poudre dans la région de fabrication correspondant à une section transversale de la pièce métallique,
   ∘ des moyens de déplacement du plateau de fabrication parallèlement à la direction de fabrication.

Selon un autre aspect, l'invention concerne un procédé de caractérisation d'un écoulement produit dans un dispositif tel que défini ci-dessus, ledit procédé comprenant les étapes suivantes :
a) détermination d'au moins une dimension de la région de fabrication,
b) sélection de modules parmi un ensemble de modules donné pour former au moins l'un du premier bras de déplacement et du deuxième bras de déplacement du robot modulable de façon à ajuster la longueur totale du premier bras de déplacement et/ou la longueur totale du deuxième bras de déplacement en fonction de la dimension déterminée à l'étape a),
c) positionnement du robot dans la chambre de fabrication de sorte que la sonde de mesure occupe une première position,
d) alimentation de la chambre de fabrication en gaz de façon à produire un écoulement gazeux de protection de la région de fabrication,
e) acquisition d'une première mesure d'au moins une grandeur physique représentative de l'écoulement au moyen de la sonde de mesure,
f) déplacement en translation du premier châssis le long du premier bras de déplacement et/ou du deuxième châssis le long du deuxième bras de déplacement de sorte que la sonde de mesure occupe une deuxième position,
g) acquisition d'une deuxième mesure d'au moins une grandeur physique au moyen de la sonde de mesure.

L'invention va maintenant être mieux décrite grâce à la figure unique ci-annexée, fournie à titre illustratif et non limitatif.
Fig. 1 schématise une installation pour la mise en œuvre d'un procédé de fabrication additive selon un mode de réalisation de l'invention.
Fig. 2 montre une vue tridimensionnelle d'un robot modulable selon un mode de réalisation de l'invention.
Fig. 3 montre une vue de dessus du robot selon Fig. 2.
Fig. 4 montre une vue tridimensionnelle d'un robot modulable selon un autre mode de réalisation de l'invention.
Fig. 5 montre des moyens d'assemblage de modules de bras de déplacement selon un mode de réalisation de l'invention.
Fig. 6 montre des moyens d'assemblage de modules de bras de déplacement selon d'autres modes de réalisation de l'invention.

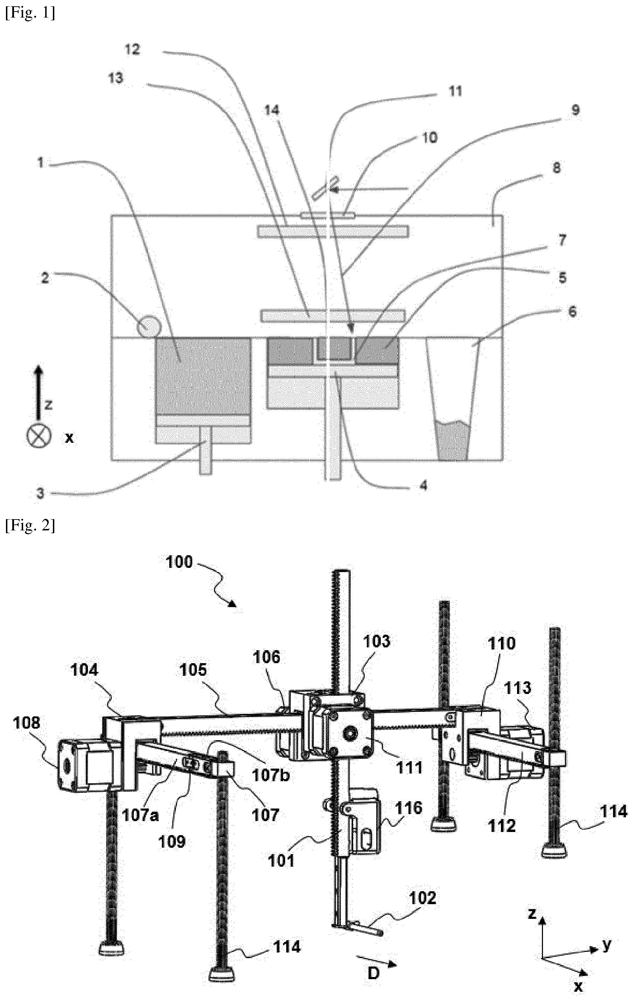

Un exemple de mise en œuvre d'un procédé de fabrication additive dans une chambre de fabrication est visible sur Fig. 1. L'invention s'applique en particulier à la fusion laser sur lit de poudre. Dans ce cas le moyen d'irradiation du matériau de base est une source laser. On pourra aussi envisager d'utiliser un faisceau d'électrons comme moyen d'irradiation.

En fonctionnement, la fusion d'un lit de poudre 14, formant le matériau de base, est réalisée par balayage d'un faisceau laser 9 obtenu à l'aide d'une tête 11 ou scanner, comprenant par exemple un miroir de renvoi orientable. La tête 11 est pilotée par une commande numérique qui oriente le faisceau laser vers les zones à fondre du lit de poudre 14. Le faisceau laser 9 peut être généré par au moins une source laser choisie parmi un laser CO₂, un laser à fibres ou à disques, un laser à diodes.

Le dispositif selon l'invention comprend une enceinte appelée chambre de fabrication 8. La chambre 8 est destinée à contenir une atmosphère gazeuse qui peut être formée d'un gaz de protection inerte tel que l'argon ou l'azote. Le gaz de protection est distribué dans la chambre par un système d'alimentation en gaz comprenant une ou plusieurs entrées de gaz. De préférence, au moins une entrée de gaz 13 distribue le gaz de protection au-dessus du lit de poudre 14, de préférence dans un plan sensiblement orthogonal à la direction de fabrication z suivant laquelle les couches de matériau de base sont déposées et fondues successivement. De préférence, l'écoulement gazeux s'écoule suivant une direction d'écoulement x orthogonale à la direction z.

Le gaz de protection comprend de préférence au moins un composant inerte choisi parmi l'argon, l'hélium, l'azote. Le gaz de protection pourra éventuellement contenir des composants additionnels, par exemple du dioxyde de carbone. Avantageusement, la chambre est équipée d'un système d'aspiration des fumées et des projections. Ce système est agencé de préférence sur un côté de la chambre situé à l'opposé de l'entrée de gaz 13. La direction d'écoulement x est orientée du premier orifice 13 vers au moins un orifice d'aspiration du système d'aspiration.

De préférence, un orifice 12 distribue le gaz de protection en-dessous du hublot de protection 10 de manière à éviter l'encrassement de celui-ci par les fumées issues du processus de fusion des couches.

De préférence, la fabrication de la pièce débute après une étape de purge de la chambre de fabrication permettant d'obtenir une atmosphère gazeuse dont la teneur en oxygène est inférieure à 0,1% en volume. La chambre de fabrication comprend des capteurs, par exemple de type électrochimique ou zircone, configurés pour mesurer la teneur en oxygène dans la chambre de fabrication et ainsi autoriser ou stopper la fabrication.

Pendant la fabrication de la pièce, le lit de poudre 14 est étalé par un racleur 2 sur un plateau de fabrication 4. La poudre est alimentée par un bac 1 qui remonte grâce à un piston 3. Le surplus de poudre tombe dans le réservoir 6.

Après chaque fabrication de couche, le plateau de fabrication 4 descend, dans une direction opposée à la direction de fabrication z, d'une hauteur correspond à la hauteur de la nouvelle couche de poudre déposée sur la couche précédente. Après le dépôt de chaque couche, un balayage sélectif du lit de poudre est opéré avec le faisceau laser, suivant le modèle numérique déterminant la forme tridimensionnelle de la pièce. La couche de poudre métallique est fondue sélectivement dans une région de fabrication prédéfinie correspondant à une section transversale de la pièce métallique que l'on souhaite fabriquer, cette section transversale étant orthogonale à la direction de fabrication z. Les étapes de dépôt et de fusion de lit et déplacement de plateau sont réitérées au moins une fois, jusqu'à la construction complète de la pièce par superposition, suivant la direction z, des différentes sections fondues. Notons que de préférence, le dépôt d'une nouvelle couche se fait après solidification de la couche précédente. A noter que la fusion de la poudre s'effectue de préférence suivant des directions globales de fusion opposées à la direction d'écoulement y.

Sur le plateau de fabrication 4, une quantité de poudre non fondue 5 subsiste autour de la pièce 7 en cours de fabrication. De manière générale, l'épaisseur de chaque couche fabriquée est comprise entre 10 à 120 µm, suivant la qualité et la rapidité de fabrication de la pièce ou des pièces à réaliser. Cette épaisseur de couche dépend également de la granulométrie des poudres. De préférence, la poudre métallique utilisée est formée de grains d'un diamètre compris entre 10 et 70 µm.

Le matériau de base 14 pourra par exemple être choisi parmi les aciers alliés, les aciers non alliés, en particulier les aciers inoxydables, les aciers au carbone, l'aluminium, les alliages d'aluminium, le nickel, les alliages de nickel, le titane, les alliages de titane.

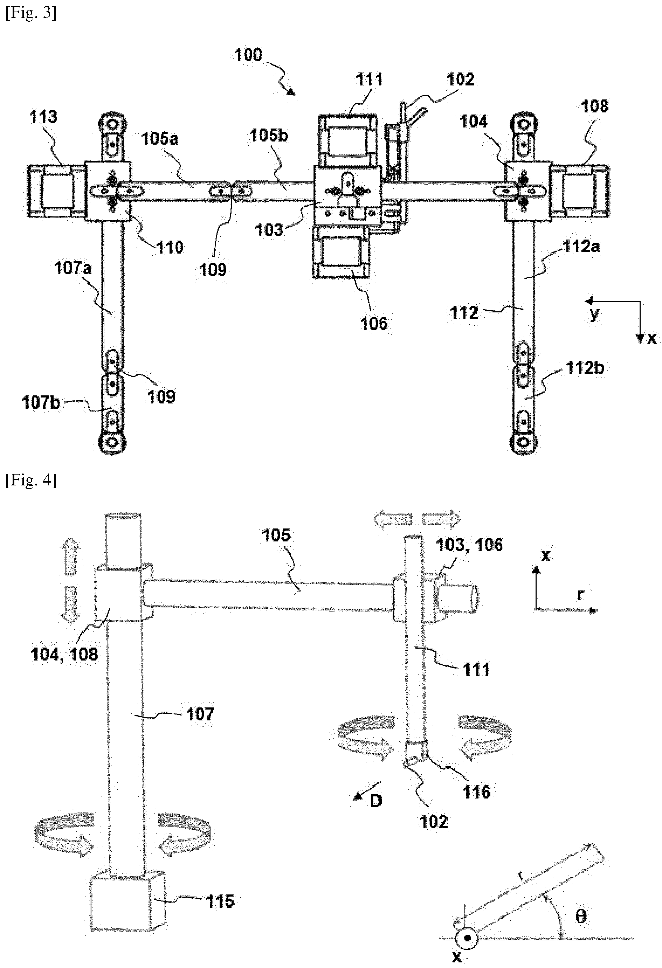

Fig. 2 illustre un mode de réalisation particulier d'un robot modulable 100 configuré pour caractériser au moins une portion d'un écoulement gazeux de protection généré dans une chambre de fabrication 8. Fig. 3 est une vue de dessus de ce robot. Dans ce mode de réalisation, le robot modulable 100 est un robot cartésien déplaçable selon trois axes parallèles aux trois directions x, y, z d'un repère cartésien. En fonctionnement, les directions x, y sont de préférence comprises dans un plan qui est orthogonal à la direction z et qui est parallèle à la région de fabrication correspondant à une section transversale de la pièce à fabriquer. La troisième direction z est de préférence verticale.

Ledit robot modulable 100 comprend un bras de mesure 101 sur lequel est fixé au moins une sonde de mesure 102 configurée pour mesurer au moins une grandeur physique caractéristique de l'écoulement gazeux. Un premier châssis 103 supporte le bras de mesure 101 et un premier bras de déplacement 105 est associé au premier châssis 103 et s'étendant parallèlement à la première direction y. Le robot 100 comprend des premiers moyens d'entraînement 106 aptes à générer un déplacement en translation du premier châssis 103 le long du premier bras de déplacement 105.

Le robot 100 comprend en outre un deuxième châssis 104 auquel le premier bras de déplacement 105 est rendu solidaire. Un deuxième bras de déplacement 107 associé au deuxième châssis 104 et s'étend parallèlement à une deuxième direction x. Des deuxièmes moyens d'entrainement 108 permettent de générer un déplacement en translation du deuxième châssis 104, et du premier bras de déplacement 105 solidaire du deuxième châssis, le long du deuxième bras de déplacement 107, permettant ainsi un déplacement du bras de mesure 101 dans les deux directions x, y.

Selon l'invention, au moins l'un du premier bras de déplacement 105 et du deuxième bras de déplacement 107 du robot modulable 100 comprend plusieurs modules 105a, 105b, 107a, 107b physiquement distincts et assemblés les uns à la suite des autres par des moyens d'assemblage amovibles 109 de sorte que la longueur totale du premier bras de déplacement 105 et/ou la longueur totale du deuxième bras de déplacement 107 est ajustable par retrait ou ajout d'un ou plusieurs modules 105a, 105b, 107a, 107b. Pour le premier bras de déplacement 105, les modules 105a, 105b sont assemblés l'un à la suite du ou des autres suivant la première direction y. Pour le deuxième bras de déplacement 107, les modules 107a, 107b sont assemblés l'un à la suite du ou des autres suivant la deuxième direction x. La longueur totale du premier bras 105, mesurée dans la première direction y, correspond à la somme des longueurs individuelles des modules formant le premier bras 105. La longueur totale du deuxième bras 107, mesurée dans la deuxième direction x, correspond à la somme des longueurs individuelles des modules formant le deuxième bras 107. Ainsi, la longueur des bras de déplacement peut être facilement adaptée à des changements de dimensions de la chambre et/ou de la région d'écoulement à caractériser. Un robot conçu pour une chambre peut être utilisé dans une autre chambre en modifiant le nombre et/ou la longueur des modules formant le bras, ce qui offre une plus grande flexibilité et une rapidité d'adaptation, quelles que soient les dimensions de la chambre et de la région de fabrication à caractériser.

De préférence, chacun des premier 105 et deuxième bras de déplacement 107 du robot modulable 100 comprend plusieurs modules, ce qui offre une adaptabilité dans les deux dimensions transversales de la chambre.

Avantageusement, le robot modulable 100 comprend des troisièmes moyens d'entraînement 111 du bras de mesure 101. Les troisièmes moyens d'entraînement 111 sont solidaires du premier châssis 103 et aptes à générer un déplacement en translation du bras de mesure 101 parallèlement à la troisième direction z. On peut ainsi opérer un déplacement de la sonde de mesure 102 dans une troisième dimension.

De préférence, le robot modulable 100 comprend en outre un troisième châssis 110 et un troisième bras de déplacement 112 associé au troisième châssis 110, le troisième bras de déplacement 112 s'étendant parallèlement au deuxième bras de déplacement 107. Le premier bras de déplacement 105 est fixé au deuxième châssis 104 d'une part et au troisième châssis 110 d'autre part. Des quatrièmes moyens d'entraînement 113 sont configurés pour générer un déplacement en translation du troisième châssis 110 parallèlement au troisième bras 112. Cela améliore la robustesse du robot et le contrôle de ses déplacements. De préférence, le robot 100 comprend des moyens de synchronisation des deuxièmes 108 et quatrièmes moyens d'entraînement 113 configurés pour synchroniser le déplacement en translation du deuxième châssis 104 et du troisième châssis 110.

Notons que de préférence, le troisième bras de déplacement 112 et/ou le bras de mesure 101 sont aussi formés de plusieurs modules pour ajuster leurs longueurs. Selon une possibilité, les bras de déplacement du robot 100 sont montés sur des pieds de fixation 114 réglables en hauteur, c'est-à-dire permettant de régler le positionnement des bras de déplacement du robot suivant la troisième direction z. En particulier, chacun des premier 105, deuxième 107 et/ou troisième 112 bras de déplacement et/ou le bras de mesure 101 du robot modulable 100 comprend de deux à 40 modules, de préférence de 2 à 10 modules. A noter que le bras de mesure 101 peut n'être formé que d'un module.

En particulier, les modules formant les premiers 105, deuxième 107 et/ou troisième 112 bras de déplacement et/ou le bras de mesure 101 du robot modulable (100) présentent des longueurs comprises entre 25 et 500 mm.

Fig. 4 illustre un mode de réalisation particulier dans lequel le robot modulable 100 est un robot polaire déplaçable en translation ainsi qu'en rotation dans un système de coordonnées cylindriques x, r, θ. En particulier, le robot modulable 100 comprend des cinquièmes moyens d'entraînement 115, 108 aptes à générer un déplacement en rotation du deuxième châssis 104 autour du deuxième bras 107 ou à générer une rotation du deuxième bras 107 sur lui-même. De préférence, la première direction correspond à la direction radiale r et la deuxième direction x correspond à la direction verticale. Le déplacement en rotation du premier châssis 103 fait varier le positionnement angulaire θ.

Selon une possibilité, applicable aux différents modes de réalisation de l'invention, le robot 100 peut comprendre des moyens d'ajustement angulaire 116 du positionnement de la sonde de mesure 102 par pivotement sur le premier bras de déplacement 105 et/ou par rotation autour du premier bras de déplacement 105.

Cela permet de pouvoir aligner la sonde de mesure 102 avec la direction de l'écoulement gazeux de protection.

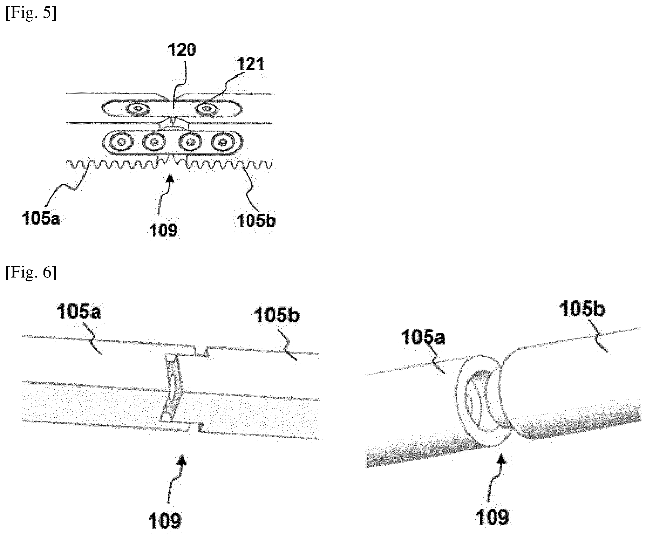

Fig. 5 et Fig. 6 illustrent des modes de réalisation possibles des moyens d'assemblage amovibles 109 de modules entre eux. Les moyens d'assemblage peuvent comprendre une ou plusieurs pièces intermédiaires 120 et des moyens de solidarisation 121 de la pièce intermédiaire 120 à un module 105a d'une part et à un autre module 105b d'autre part. Fig. 5 montre un exemple de pièces 120 sous la forme d'agrafes vissées 121 à chacun des bras. Selon une alternative, les moyens d'assemblage amovibles 109 peuvent être configurés pour l'assemblage de modules par encastrement et/ou par liaison magnétique. De façon alternative ou complémentaire, les moyens d'assemblage 109 peuvent aussi comprendre des détrompeurs.

Selon un mode de réalisation, les moyens d'entraînement du robot modulable 100 comprennent chacun un moteur coopérant avec un système d'entraînement du châssis associé. Le système d'entraînement peut être à pignon et crémaillère. Dans ce cas, les bras de déplacement ont une surface dentée et forment des crémaillères destinées à s'engrener avec un pignon denté qui est mis en rotation par le moteur. Selon une autre possibilité, le système d'entraînement peut fonctionner par friction. Dans ce cas un pignon revêtu d'un matériau déformable est mis en rotation par le moteur est coopéré par friction avec la surface non déformable du bras de déplacement associé. A noter que le dispositif selon l'invention peut mettre en œuvre des moteurs pas à pas unipolaires ou bipolaires. On pourra aussi envisager l'utilisation de moteurs à courant continu.

De préférence, le robot modulable 100 est configuré pour se déplacer par pas de 1 mm au plus dans l'une et/ou l'autre des directions. Les déplacements peuvent aussi être opérés avec des pas plus faibles, typiquement allant jusqu'au pas du moteur utilisé, en particulier jusqu'à 0,02 mm.

Dans le cadre de d'invention, la sonde de mesure 102 peut être tout moyen apte à mesurer une grandeur physique représentative de l'homogénéité de l'écoulement gazeux. De préférence, la sonde de mesure 102 est configurée pour mesurer une vitesse et/ou un débit volumique de l'écoulement gazeux, en particulier la sonde de mesure 102 comprend un tube de Pitot ou système à fil chaud.

Il est aussi envisageable d'équiper le bras de mesure 101 d'au moins une sonde de mesure additionnelle configurée pour mesurer une température et/ou une teneur en oxygène dans l'écoulement gazeux. La sonde de mesure 102 elle-même peut aussi être configurée pour mesurer la vitesse de l'écoulement et une autre grandeur physique telle que la température et/ou la teneur en oxygène dans l'écoulement gazeux.

Avantageusement, le dispositif selon l'invention comprend une unité de contrôle-commande et des moyens de transmission de signaux de commande et de signaux de mesure entre l'unité de contrôle-commande vers le robot modulable 100. De préférence, l'unité de contrôle-commande comprend au moins l'un parmi un microcontrôleur, un microprocesseur, un ordinateur. L'unité de contrôle-commande est configurée pour piloter le déplacement du robot modulable 100 et pour l'acquisition des mesures réalisées par la sonde de mesure 102. Les moyens de transmission peuvent être filaires ou sans fil, de préférence par liaison WIFI ou Bluetooth, ou tout autre protocole de liaison sans fil.

De préférence, les moyens d'entraînement et l'unité de contrôle-commande sont alimentés électriquement par batterie, ce qui rend le dispositif autonome. On pourra aussi envisager de relier le dispositif au réseau électrique, afin de réaliser des caractérisations d'écoulement de plus grande durée.

La région de fabrication au niveau de laquelle l'écoulement gazeux est à caractériser peut présenter, dans un plan correspondant à un plan de coupe transversale de la pièce à fabriquer, des dimensions caractéristiques allant de 50 mm à 800 mm. Le dispositif selon l'invention peut s'adapter à ces différentes dimensions grâce à la modularité des bras de déplacement.

## Revendications

1. Dispositif de fabrication additive d'au moins une pièce comprenant :
- une chambre de fabrication (8) comprenant dans son volume interne une région de fabrication (7),
- un moyen d'irradiation (9) configuré pour irradier au moins une partie de la région de fabrication (7) correspondant à une section transversale de ladite pièce,
- un système d'alimentation en gaz relié au volume interne de chambre de fabrication (8) et configuré pour produire un écoulement gazeux de protection de la région de fabrication (7) lorsque la chambre de fabrication (8) est alimentée en gaz,
- un robot modulable (100) configuré pour caractériser au moins une portion de l'écoulement gazeux de protection, ledit robot modulable (100) comprenant :
• un bras de mesure (101) comprenant au moins une sonde de mesure (102) configurée pour mesurer au moins une grandeur physique caractéristique de l'écoulement gazeux,
• un premier châssis (103) supportant le bras de mesure (101),
• un premier bras de déplacement (105) associé au premier châssis (103) et s'étendant parallèlement à une première direction (r, y),
• des premiers moyens d'entraînement (106) du premier châssis (103) aptes à générer un déplacement en translation du premier châssis (103) le long du premier bras de déplacement (105),
• un deuxième châssis (104) auquel le premier bras de déplacement (105) est rendu solidaire,
• un deuxième bras de déplacement (107) associé au deuxième châssis et s'étendant parallèlement à une deuxième direction (x),
• des deuxièmes moyens d'entrainement (108) du deuxième châssis (104) aptes à générer un déplacement en translation du deuxième châssis (104) et du premier bras de déplacement (105) le long du deuxième bras de déplacement (107),
**caractérisé en ce qu'**au moins l'un du premier bras de déplacement (105) et du deuxième bras de déplacement (107) du robot modulable (100) comprend plusieurs modules (105a, 105b, 107a, 107b) physiquement distincts et assemblés entre eux par des moyens d'assemblage amovibles (109) de sorte que la longueur totale du premier bras de déplacement (105) et/ou la longueur totale du deuxième bras de déplacement (107) est ajustable par retrait ou ajout d'un ou plusieurs modules (105a, 105b, 107a, 107b).

2. Dispositif selon la revendication 1, **caractérisé en ce que** la première direction (y, r) est orthogonale à la deuxième direction (x).

3. Dispositif selon l'une des revendications 1 ou 2, **caractérisé en ce que** le robot modulable (100) comprend des troisièmes moyens d'entraînement (111) du bras de mesure (101) solidaires du premier châssis (103), les troisièmes moyens d'entraînement (111) étant aptes à générer un déplacement en translation du bras de mesure (101) parallèlement à une troisième direction (z) orthogonale à la première direction (x).

4. Dispositif selon l'une des revendications 1 à 3, **caractérisé en ce que** le robot modulable (100) comprend en outre un troisième châssis (110) et un troisième bras de déplacement (112) associé au troisième châssis (110), le troisième bras de déplacement (112) s'étendant parallèlement au deuxième bras de déplacement (107), le premier bras de déplacement (105) étant solidaire du troisième châssis (110), le robot modulable (100) comprenant des quatrièmes moyens d'entraînement (113) du troisième châssis (110) aptes à générer un déplacement en translation du troisième châssis (110) le long du troisième bras de déplacement (112) et des moyens de synchronisation des deuxièmes (108) et quatrièmes moyens d'entraînement (113) configurés pour synchroniser le déplacement en translation du deuxième châssis (104) et du troisième châssis (110).

5. Dispositif selon l'une des revendications 1 à 2, **caractérisé en ce que** le robot modulable (100) comprend des cinquièmes moyens d'entraînement (115, 108) aptes à générer un déplacement en rotation du deuxième châssis (104) autour du deuxième bras (107) ou à générer une rotation du deuxième bras (107) sur lui-même.

6. Dispositif selon l'une des revendications précédentes, **caractérisé en ce que** le robot (100) comprend des moyens d'ajustement angulaire configurés pour ajuster le positionnement de la sonde de mesure (102) par pivotement sur le premier bras de déplacement (105) et/ou par rotation autour du premier bras de déplacement (105).

7. Dispositif selon l'une des revendications précédentes, **caractérisé en ce que** les moyens d'assemblage amovibles (109) d'un module (105a, 107a) à un autre (105b, 107b) comprennent au moins une pièce intermédiaire (120) et des moyens de solidarisation (121) de ladite pièce intermédiaire (120) à un module d'une part et à l'autre module d'autre part.

8. Dispositif selon l'une des revendications précédentes, **caractérisé en ce que** les moyens d'assemblage amovibles (109) sont configurés pour l'assemblage d'un module (105a, 107a) à un autre (105b, 107b) par encastrement et/ou par liaison magnétique.

9. Dispositif selon l'une des revendications précédentes, **caractérisé en ce que** chacun des premier (105), deuxième (107) et/ou troisième (112) bras de déplacement et/ou le bras de mesure (101) du robot modulable (100) comprend de 2 à 40 modules, de préférence de 2 à 10 modules.

10. Dispositif selon l'une des revendications précédentes, **caractérisé en ce que** les modules formant les premiers (105), deuxième (107) et/ou troisième (112) bras de déplacement et/ou le bras de mesure (101) du robot modulable (100) présentent des longueurs comprises entre 25 et 500 mm.

11. Dispositif selon l'une des revendications précédentes, **caractérisé en ce que** chacun des premiers (106), deuxièmes (108), troisièmes (111), quatrièmes (113) et/ou cinquièmes (115) moyens d'entraînement comprend un moteur coopérant avec un système d'entraînement à pignon et crémaillère, le ou les bras de déplacement ayant une surface dentée destinée à s'engrener avec un pignon denté, ou un système d'entraînement par friction comprenant un pignon revêtu d'un matériau déformable coopérant par friction avec le ou les bras de déplacement.

12. Dispositif selon l'une des revendications précédentes, **caractérisé en ce que** la sonde de mesure (102) est configurée pour mesurer une vitesse et/ou un débit volumique de l'écoulement gazeux, en particulier la sonde de mesure (102) comprend un tube de Pitot ou un système à fil chaud.

13. Dispositif selon l'une des revendications précédentes, **caractérisé en ce que** le bras de mesure (101) comprend au moins une sonde de mesure additionnelle configurée pour mesurer une température et/ou une teneur en oxygène dans l'écoulement gazeux ou la sonde de mesure (102) est configurée pour mesurer une température et/ou une teneur en oxygène dans l'écoulement gazeux.

14. Dispositif selon l'une des revendications précédentes, **caractérisé en ce qu'**il est configuré pour la fabrication additive par fusion laser sur lit de poudre, le dispositif comprenant :
- un plateau de fabrication (4) configuré pour recevoir le matériau de base (14) sous la forme d'une couche de poudre métallique. a direction de fabrication z suivant laquelle les couches de matériau de base sont déposées et fondues successivement.
- des moyens d'étalement de ladite couche de façon à former un lit de poudre s'étendant dans un plan orthogonal à une direction de fabrication (z),
- au moins une source laser configurée pour irradier et opérer une fusion sélective du lit de poudre dans la région de fabrication (7) correspondant à une section transversale de la pièce métallique,
- des moyens de déplacement du plateau de fabrication (4) parallèlement à la direction de fabrication (z).

15. Procédé de caractérisation d'un écoulement produit dans un dispositif tel que défini par l'une des revendications précédentes, ledit procédé comprenant les étapes suivantes :
a) détermination d'au moins une dimension de la région de fabrication,
b) sélection de modules parmi un ensemble de modules donné pour former au moins l'un du premier bras de déplacement (105) et du deuxième bras de déplacement (107) du robot modulable (100) de façon à ajuster la longueur totale du premier bras de déplacement (105) et/ou la longueur totale du deuxième bras de déplacement (107) en fonction de la dimension déterminée à l'étape a),
c) positionnement du robot dans la chambre de fabrication de sorte que la sonde de mesure (102) occupe une première position,
d) alimentation de la chambre de fabrication (8) en gaz de façon à produire un écoulement gazeux de protection de la région de fabrication (7),
e) acquisition d'une première mesure d'au moins une grandeur physique représentative de l'écoulement au moyen de la sonde de mesure (102),
f) déplacement en translation du premier châssis (103) le long du premier bras de déplacement (105) et/ou du deuxième châssis (104) le long du deuxième bras de déplacement (107) de sorte que la sonde de mesure (102) occupe une deuxième position,
g) acquisition d'une deuxième mesure d'au moins une grandeur physique au moyen de la sonde de mesure (102).

## Patentansprüche

1. Eine Vorrichtung zur additiven Fertigung mindestens eines Teils, umfassend: eine Fertigungskammer (8), die in ihrem Innenvolumen einen Fertigungsbereich (7) umfasst, ein Bestrahlungsmittel (9), das dazu konfiguriert ist, mindestens einen Teil des Fertigungsbereichs (7) zu bestrahlen, der einem Querabschnitt des besagten Teils entspricht, ein Gasversorgungssystem, das mit dem Innenvolumen der Fertigungskammer (8) verbunden und dazu konfiguriert ist, einen Schutzgasstrom im Fertigungsbereich (7) zu erzeugen, wenn die Fertigungskammer (8) mit Gas versorgt wird, einen modularen Roboter (100), der dazu konfiguriert ist, mindestens einen Abschnitt des Schutzgasstroms zu charakterisieren, wobei der besagte modulare Roboter (100) umfasst:
* einen Messarm (101), der mindestens eine Messsonde (102) umfasst, die dazu konfiguriert ist, mindestens eine charakteristische physikalische Größe des Gasstroms zu messen,
* ein erstes Chassis (103), das den Messarm (101) trägt,
* einen ersten Verschiebearm (105), der dem ersten Chassis (103) zugeordnet ist und sich parallel zu einer ersten Richtung (r, y) erstreckt,
* erste Antriebsmittel (106) des ersten Chassis (103), die geeignet sind, eine Verschiebung in Translation des ersten Chassis (103) entlang des ersten Verschiebearms (105) zu erzeugen,
* ein zweites Chassis (104), mit dem der erste Verschiebearm (105) fest verbunden ist,
* einen zweiten Verschiebearm (107), der dem zweiten Chassis zugeordnet ist und sich parallel zu einer zweiten Richtung (x) erstreckt,
* zweite Antriebsmittel (108) des zweiten Chassis (104), die geeignet sind, eine Verschiebung in Translation des zweiten Chassis (104) und des ersten Verschiebearms (105) entlang des zweiten Verschiebearms (107) zu erzeugen,
**dadurch gekennzeichnet, dass** mindestens einer des ersten Verschiebearms (105) und des zweiten Verschiebearms (107) des modularen Roboters (100) mehrere physikalisch unterschiedliche Module (105a, 105b, 107a, 107b) umfasst, die durch abnehmbare Montagemittel (109) miteinander verbunden sind, so dass die Gesamtlänge des ersten Verschiebearms (105) und/oder die Gesamtlänge des zweiten Verschiebearms (107) durch Entfernen oder Hinzufügen eines oder mehrerer Module (105a, 105b, 107a, 107b) einstellbar ist.

2. Die Vorrichtung nach Anspruch 1, **dadurch gekennzeichnet, dass** die erste Richtung (y, r) orthogonal zu der zweiten Richtung (x) ist.

3. Die Vorrichtung nach einem der Ansprüche 1 oder 2, **dadurch gekennzeichnet, dass** der modulare Roboter (100) dritte Antriebsmittel (111) des Messarms (101) umfasst, die mit dem ersten Chassis (103) fest verbunden sind, wobei die dritten Antriebsmittel (111) geeignet sind, eine Verschiebung in Translation des Messarms (101) parallel zu einer dritten Richtung (z) zu erzeugen, die orthogonal zu der ersten Richtung (x) ist.

4. Die Vorrichtung nach einem der Ansprüche 1 bis 3, **dadurch gekennzeichnet, dass** der modulare Roboter (100) ferner ein drittes Chassis (110) und einen dem dritten Chassis (110) zugeordneten dritten Verschiebearm (112) umfasst, wobei sich der dritte Verschiebearm (112) parallel zu dem zweiten Verschiebearm (107) erstreckt, wobei der erste Verschiebearm (105) mit dem dritten Chassis (110) fest verbunden ist, wobei der modulare Roboter (100) vierte Antriebsmittel (113) des dritten Chassis (110) umfasst, die geeignet sind, eine Verschiebung in Translation des dritten Chassis (110) entlang des dritten Verschiebearms (112) zu erzeugen, und Synchronisationsmittel für die zweiten (108) und vierten (113) Antriebsmittel, die dazu konfiguriert sind, die Verschiebung in Translation des zweiten Chassis (104) und des dritten Chassis (110) zu synchronisieren.

5. Die Vorrichtung nach einem der Ansprüche 1 oder 2, **dadurch gekennzeichnet, dass** der modulare Roboter (100) fünfte Antriebsmittel (115, 108) umfasst, die geeignet sind, eine Drehverschiebung des zweiten Chassis (104) um den zweiten Arm (107) oder eine Drehung des zweiten Arms (107) um sich selbst zu erzeugen.

6. Die Vorrichtung nach einem der vorhergehenden Ansprüche, **dadurch gekennzeichnet, dass** der Roboter (100) Winkelverstellmittel umfasst, die dazu konfiguriert sind, die Positionierung der Messsonde (102) durch Schwenken auf dem ersten Verschiebearm (105) und/oder durch Rotation um den ersten Verschiebearm (105) einzustellen.

7. Die Vorrichtung nach einem der vorhergehenden Ansprüche, **dadurch gekennzeichnet, dass** die abnehmbaren Montagemittel (109) eines Moduls (105a, 107a) mit einem anderen (105b, 107b) mindestens ein Zwischenstück (120) und Mittel zur Befestigung (121) des besagten Zwischenstücks (120) an einem Modul einerseits und an dem anderen Modul andererseits umfassen.

8. Die Vorrichtung nach einem der vorhergehenden Ansprüche, **dadurch gekennzeichnet, dass** die abnehmbaren Montagemittel (109) für die Montage eines Moduls (105a, 107a) mit einem anderen (105b, 107b) durch Einbetten und/oder durch magnetische Verbindung konfiguriert sind.

9. Die Vorrichtung nach einem der vorhergehenden Ansprüche, **dadurch gekennzeichnet, dass** jeder des ersten (105), zweiten (107) und/oder dritten (112) Verschiebearms und/oder des Messarms (101) des modularen Roboters (100) 2 bis 40 Module, vorzugsweise 2 bis 10 Module, umfasst.

10. Die Vorrichtung nach einem der vorhergehenden Ansprüche, **dadurch gekennzeichnet, dass** die Module, die den ersten (105), zweiten (107) und/oder dritten (112) Verschiebearm und/oder den Messarm (101) des modularen Roboters (100) bilden, Längen zwischen 25 und 500 mm aufweisen.

11. Die Vorrichtung nach einem der vorhergehenden Ansprüche, **dadurch gekennzeichnet, dass** jedes der ersten (106), zweiten (108), dritten (111), vierten (113) und/oder fünften (115) Antriebsmittel einen Motor umfasst, der mit einem Zahnstangenantriebssystem zusammenwirkt, wobei der oder die Verschiebearme eine gezahnte Oberfläche aufweisen, die dazu bestimmt ist, in ein gezahntes Ritzel einzugreifen, oder ein Reibungsantriebssystem, das ein mit einem verformbaren Material beschichtetes Ritzel umfasst, das durch Reibung mit dem oder den Verschiebearmen zusammenwirkt.

12. Die Vorrichtung nach einem der vorhergehenden Ansprüche, **dadurch gekennzeichnet, dass** die Messsonde (102) dazu konfiguriert ist, eine Geschwindigkeit und/oder einen volumetrischen Durchfluss des Gasstroms zu messen, wobei insbesondere die Messsonde (102) ein Pitot-Rohr oder ein Hitzdrahtsystem umfasst.

13. Die Vorrichtung nach einem der vorhergehenden Ansprüche, **dadurch gekennzeichnet, dass** der Messarm (101) mindestens eine zusätzliche Messsonde umfasst, die dazu konfiguriert ist, eine Temperatur und/oder einen Sauerstoffgehalt im Gasstrom zu messen, oder die Messsonde (102) dazu konfiguriert ist, eine Temperatur und/oder einen Sauerstoffgehalt im Gasstrom zu messen.

14. Die Vorrichtung nach einem der vorhergehenden Ansprüche, **dadurch gekennzeichnet, dass** sie für die additive Fertigung durch Laser-Pulverbettfusion konfiguriert ist, wobei die Vorrichtung umfasst: - eine Fertigungsplatte (4), die dazu konfiguriert ist, das Basismaterial (14) in Form einer metallischen Pulverschicht aufzunehmen. eine Fertigungsrichtung z, entlang der die Schichten des Basismaterials nacheinander abgeschieden und geschmolzen werden. - Mittel zum Verteilen der besagten Schicht, um ein Pulverbett zu bilden, das sich in einer Ebene orthogonal zu einer Fertigungsrichtung (z) erstreckt, - mindestens eine Laserquelle, die dazu konfiguriert ist, das Pulverbett im Fertigungsbereich (7), der einem Querabschnitt des Metallteils entspricht, zu bestrahlen und eine selektive Fusion zu bewirken, - Mittel zum Verschieben der Fertigungsplatte (4) parallel zu der Fertigungsrichtung (z).

15. Ein Verfahren zur Charakterisierung eines in einer Vorrichtung nach einem der vorhergehenden Ansprüche erzeugten Stroms, wobei das Verfahren die folgenden Schritte umfasst:
a) Bestimmung mindestens einer Abmessung des Fertigungsbereichs,
b) Auswahl von Modulen aus einer gegebenen Menge von Modulen, um mindestens einen des ersten Verschiebearms (105) und des zweiten Verschiebearms (107) des modularen Roboters (100) zu bilden, um die Gesamtlänge des ersten Verschiebearms (105) und/oder die Gesamtlänge des zweiten Verschiebearms (107) in Abhängigkeit von der in Schritt a) bestimmten Abmessung einzustellen,
c) Positionierung des Roboters in der Fertigungskammer, so dass die Messsonde (102) eine erste Position einnimmt,
d) Gasversorgung der Fertigungskammer (8), um einen Schutzgasstrom im Fertigungsbereich (7) zu erzeugen,
e) Erfassung einer ersten Messung mindestens einer physikalischen Größe, die für den Strom repräsentativ ist, mittels der Messsonde (102),
f) Verschiebung in Translation des ersten Chassis (103) entlang des ersten Verschiebearms (105) und/oder des zweiten Chassis (104) entlang des zweiten Verschiebearms (107), so dass die Messsonde (102) eine zweite Position einnimmt,
g) Erfassung einer zweiten Messung mindestens einer physikalischen Größe mittels der Messsonde (102).

## Claims

1. An additive manufacturing device for at least one part, comprising: a manufacturing chamber (8) comprising within its internal volume a manufacturing region (7), an irradiation means (9) configured to irradiate at least a part of the manufacturing region (7) corresponding to a transverse cross-section of said part, a gas supply system connected to the internal volume of the manufacturing chamber (8) and configured to produce a protective gas flow in the manufacturing region (7) when the manufacturing chamber (8) is supplied with gas, a modular robot (100) configured to characterize at least a portion of the protective gas flow, said modular robot (100) comprising:
* a measurement arm (101) comprising at least one measurement probe (102) configured to measure at least one characteristic physical quantity of the gas flow,
* a first chassis (103) supporting the measurement arm (101),
* a first displacement arm (105) associated with the first chassis (103) and extending parallel to a first direction (r, y),
* first drive means (106) of the first chassis (103) capable of generating a displacement in translation of the first chassis (103) along the first displacement arm (105),
* a second chassis (104) to which the first displacement arm (105) is secured,
* a second displacement arm (107) associated with the second chassis and extending parallel to a second direction (x),
* second drive means (108) of the second chassis (104) capable of generating a displacement in translation of the second chassis (104) and of the first displacement arm (105) along the second displacement arm (107),
**characterized in that** at least one of the first displacement arm (105) and the second displacement arm (107) of the modular robot (100) comprises several physically distinct modules (105a, 105b, 107a, 107b) assembled together by removable assembly means (109) so that the total length of the first displacement arm (105) and/or the total length of the second displacement arm (107) is adjustable by removing or adding one or more modules (105a, 105b, 107a, 107b).

2. The device according to claim 1, **characterized in that** the first direction (y, r) is orthogonal to the second direction (x).

3. The device according to claim 1 or 2, **characterized in that** the modular robot (100) comprises third drive means (111) for the measurement arm (101) integral with the first chassis (103), the third drive means (111) being capable of generating a displacement in translation of the measurement arm (101) parallel to a third direction (z) orthogonal to the first direction (x).

4. The device according to one of claims 1 to 3, **characterized in that** the modular robot (100) further comprises a third chassis (110) and a third displacement arm (112) associated with the third chassis (110), the third displacement arm (112) extending parallel to the second displacement arm (107), the first displacement arm (105) being integral with the third chassis (110), the modular robot (100) comprising fourth drive means (113) of the third chassis (110) capable of generating a displacement in translation of the third chassis (110) along the third displacement arm (112) and synchronization means for the second (108) and fourth (113) drive means configured to synchronize the displacement in translation of the second chassis (104) and of the third chassis (110).

5. The device according to claim 1 or 2, **characterized in that** the modular robot (100) comprises fifth drive means (115, 108) capable of generating a rotational displacement of the second chassis (104) around the second arm (107) or generating a rotation of the second arm (107) on itself.

6. The device according to one of the preceding claims, **characterized in that** the robot (100) comprises angular adjustment means configured to adjust the positioning of the measurement probe (102) by pivoting on the first displacement arm (105) and/or by rotation around the first displacement arm (105).

7. The device according to one of the preceding claims, **characterized in that** the removable assembly means (109) of one module (105a, 107a) to another (105b, 107b) comprise at least one intermediate piece (120) and means for securing (121) said intermediate piece (120) to one module on the one hand and to the other module on the other hand.

8. The device according to one of the preceding claims, **characterized in that** the removable assembly means (109) are configured for the assembly of one module (105a, 107a) to another (105b, 107b) by embedding and/or by magnetic connection.

9. The device according to one of the preceding claims, **characterized in that** each of the first (105), second (107) and/or third (112) displacement arms and/or the measurement arm (101) of the modular robot (100) comprises from 2 to 40 modules, preferably from 2 to 10 modules.

10. The device according to one of the preceding claims, **characterized in that** the modules forming the first (105), second (107) and/or third (112) displacement arms and/or the measurement arm (101) of the modular robot (100) have lengths comprised between 25 and 500 mm.

11. The device according to one of the preceding claims, **characterized in that** each of the first (106), second (108), third (111), fourth (113) and/or fifth (115) drive means comprises a motor cooperating with a rack and pinion drive system, the displacement arm(s) having a toothed surface intended to mesh with a toothed pinion, or a friction drive system comprising a pinion coated with a deformable material cooperating by friction with the displacement arm(s).

12. The device according to one of the preceding claims, **characterized in that** the measurement probe (102) is configured to measure a speed and/or a volume flow rate of the gas flow, in particular the measurement probe (102) comprises a Pitot tube or a hot-wire system.

13. The device according to one of the preceding claims, **characterized in that** the measurement arm (101) comprises at least one additional measurement probe configured to measure a temperature and/or an oxygen content in the gas flow, or the measurement probe (102) is configured to measure a temperature and/or an oxygen content in the gas flow.

14. The device according to one of the preceding claims, **characterized in that** it is configured for additive manufacturing by laser powder bed fusion, the device comprising: - a fabrication plate (4) configured to receive the base material (14) in the form of a metallic powder layer. a fabrication direction z along which the layers of base material are successively deposited and melted. - means for spreading said layer so as to form a powder bed extending in a plane orthogonal to a fabrication direction (z), - at least one laser source configured to irradiate and operate a selective fusion of the powder bed in the fabrication region (7) corresponding to a transverse cross-section of the metallic part, - means for displacing the fabrication plate (4) parallel to the fabrication direction (z).

15. A method for characterizing a flow produced in a device as defined by one of the preceding claims, said method comprising the following steps:
a) determining at least one dimension of the manufacturing region,
b) selecting modules from a given set of modules to form at least one of the first displacement arm (105) and the second displacement arm (107) of the modular robot (100) so as to adjust the total length of the first displacement arm (105) and/or the total length of the second displacement arm (107) according to the dimension determined in step a),
c) positioning the robot in the manufacturing chamber so that the measurement probe (102) occupies a first position,
d) supplying the manufacturing chamber (8) with gas so as to produce a protective gas flow in the manufacturing region (7),
e) acquiring a first measurement of at least one physical quantity representative of the flow using the measurement probe (102),
f) displacement in translation of the first chassis (103) along the first displacement arm (105) and/or of the second chassis (104) along the second displacement arm (107) so that the measurement probe (102) occupies a second position,
g) acquiring a second measurement of at least one physical quantity using the measurement probe (102).
